# EUROPÄISCHE PATENTANMELDUNG

(11) **EP 4 533 939 A1**
(43) Veröffentlichungstag der Anmeldung: **09.04.2025**
(21) Anmeldenummer: 24204087.1
(22) Anmeldetag: 02.10.2024
(51) Int. Cl.: A01G 9/02

(54) **FASSADENELEMENT ZUR BEGRÜNUNG VON FASSADEN**

(30) Priorität: 05.10.2023 DE 202023105759 U; 10.09.2024 DE 102024125912
(71) Anmelder: Geiger, Joachim, 92369 Buchberg (DE)
(72) Erfinder: Geiger, Joachim, 92369 Buchberg (DE)
(74) Vertreter: Louis Pöhlau Lohrentz

(57) **Zusammenfassung**

Es wird ein Fassadenelement zur Begrünung von Fassaden vorgeschlagen, umfassend einen Körper (11) mit einem Hohlraum (17) zur Ansiedlung von Grünpflanzen und/oder Moos (2) und einer vorderseitigen Öffnung (12), wobei der Körper (11) an seiner Oberseite einen Wassereinlauf (13) und an seiner Unterseite einen Wasserauslauf (15) aufweist. Um ein Fassadenelement zur Begrünung von Fassaden zu schaffen, welches konstruktiv einfach aufgebaut und daher kostengünstig herzustellen ist wird vorgeschlagen, dass im Bereich des Hohlraums (17) ein Wasserspeicher (14) angeordnet ist und der Wasserauslauf (15) in einer derartigen Höhe angeordnet ist, dass im unteren Bereich des Hohlraums (17) sich ein Wasserstand entsprechender Höhe ausbildet, um die Grünpflanzen und/oder das Moos (2) zu versorgen.

## Beschreibung

Die Erfindung betrifft ein Fassadenelement zur Begrünung von Fassaden nach den Merkmalen des Oberbegriffs des Anspruchs 1.

Entsprechende Fassadenelemente werden in der Praxis zur Begrünung von Fassaden in Städten verwendet, um das Mikroklima in den Städten zu verbessern. Ein positiver Nebeneffekt ist, dass durch die Begrünung auch die Luftqualität verbessert wird. Nachteilig ist jedoch, dass die begrünten Fassadenelemente oftmals aufwendig gepflegt werden müssen, um die Begrünung dauerhaft zu erhalten.

Es ist die Aufgabe der vorliegenden Erfindung, ein Fassadenelement zur Begrünung von Fassaden zu schaffen, welches konstruktiv einfach aufgebaut und daher kostengünstig herzustellen ist und welches den Pflegeaufwand deutlich reduziert, insbesondere sich selbst versorgt.

Diese Aufgabe wird erfindungsgemäß durch ein Fassadenelement zur Begrünung von Fassaden nach den Merkmalen des Anspruchs 1 gelöst. Weiter wird diese Aufgabe durch eine Vorrichtung zur Begrünung von Fassaden nach den Merkmalen des Anspruchs 10 gelöst.

Erfindungsgemäß wird ein Fassadenelement zur Begrünung von Fassaden vorgeschlagen, umfassend einen Körper mit einem Hohlraum zur Ansiedlung von Grünpflanzen und/oder Moos und einer vorderseitigen Öffnung, wobei der Körper an seiner Oberseite einen Wassereinlauf und an seiner Unterseite einen Wasserauslauf aufweist. Wesentlich dabei ist, dass im Bereich des Hohlraums ein Wasserspeicher angeordnet ist und der Wasserauslauf in einer derartigen Höhe angeordnet ist, dass im unteren Bereich des Hohlraums sich ein Wasserstand entsprechender Höhe ausbildet, um die Grünpflanzen und/oder das Moos zu versorgen.

Ein Vorteil ist, dass durch den Wasserspeicher anfallendes Regenwasser aufgenommen und gespeichert werden kann. Indem durch den Wasserablauf in dem Hohlraum ein gewisser Wasserstand entsprechender vorbestimmbarer Höhe ausgebildet wird, können Grünpflanzen und/oder Moos dauerhaft mit Wasser versorgt werden. Dadurch ist es möglich, die Grünpflanzen allein mit dem natürlich vorkommenden Niederschlag durch Regen zu versorgen. Ein Vorteil bei der Verwendung von Moos ist, dass Moos auch längere Dürreperioden überstehen kann.

In einer vorteilhaften Ausgestaltung kann vorgesehen sein, dass der Wasserauslauf ein in dem Hohlraum angeordnetes Natursteinelement aufweist, welches einen vertikalen Spalt zum Abführen von Wasser umfasst. Alternativ kann der Wasserauslauf auch als eine Wasserleitung ausgebildet sein, die in einer entsprechenden Höhe in den Hohlraum mündet.

Insbesondere kann der Wasserspeicher im Bereich des Hohlraums aus einem porösen Material, insbesondere einem porösen Gestein und/oder einer porösen Keramik, und/oder einem porösen Ton ausgebildet sein. In dem porösen Material kann ausreichend Wasser gespeichert werden, sodass auch längere Perioden bis zum nächsten Regen überdauerbar sind.

Um eine hohe Stabilität zu erreichen kann vorgesehen sein, dass der Körper aus einem Beton gegossen, oder aus einzelnen Platten, insbesondere aus Betonplatten, zusammengesetzt ist.

Insbesondere kann der Körper des Fassadenelements eine seitlich angeordnete Ausnehmung zur Aufnahme eines Halteelements und/oder eines Verbindungselements aufweisen. Dadurch ist es möglich, das Fassadenelement über die seitliche Aufnahme mechanisch stabil zu haltern, beispielsweise an einer Fassade zu befestigen und/oder mit einem oberhalb und/oder unterhalb des Fassadenelements weiteren angeordneten Fassadenelement zu verbinden. Das Halteelement kann beispielsweise als ein Winkeleisen oder eine Leiste mit einem T-förmigen Querschnitt ausgebildet sein.

Um die Kultivierung von Grünpflanzen und/oder Moos zu verbessern kann vorgesehen sein, dass im Bereich des Hohlraums ein Substrat zur Ansiedlung von Grünpflanzen und/oder Moos angeordnet ist. Über das Substrat kann den Grünpflanzen oder dem Moos ein verbesserter Lebensraum bereitgestellt werden.

In einer vorteilhaften Ausgestaltung kann vorgesehen sein, dass im Bereich des Hohlraums und unterhalb des Wassereinlaufs eine Auffangrinne zum Auffangen von Wasser angeordnet ist. Über die Auffangrinne kann das über den Wassereinlauf eintretende Wasser besser reguliert werden. Die Auffangrinne kann ein Reservoir aufweisen, um Wasser zwischenzuspeichern. Dadurch kann die Auffangrinne als Puffer dienen um das Wasser über einen längeren Zeitraum hinweg kontinuierlich abzugeben. Vorzugsweise erstreckt sich die Auffangrinne über die gesamte Breite des Innenraums des Fassadenelements.

Vorzugsweise kann die Auffangrinne an ihrer Vorderseite eine Traufkante aufweisen, die von einer Überlauföffnung oder mehreren Überlauföffnungen unterbrochen ist. Über die Traufkante kann das Wasser zurückgehalten werden. Vorzugsweise erstreckt sich die Traufkante entlang der gesamten Auffangrinne.

Durch die Höhe der Traufkante kann dabei die Menge an zurückgehaltenem Wasser eingestellt werden. Die Überlauföffnungen dienen dazu, das Wasser aus dem Reservoir der Auffangrinne dosiert abzugeben. Über die Dimensionierung der Überlauföffnungen kann die Wasserabgabe reguliert werden. Insbesondere sind die Überlauföffnungen über die Länge der Traufkante verteilt angeordnet. Dadurch kann die Wasserabgabe entlang der gesamten Breite des Fassadenelements gleichmäßig erfolgen.

Insbesondere kann vorgesehen sein, dass die Überlauföffnungen zum Abführen von Wasser ausgebildet sind und an Ihrer Unterseite eine Führungsfläche zum Leiten von Wasser nach unten angeordnet ist. Die Führungsfläche kann als eine konkav gekrümmte Führungsfläche ausgebildet sein. Über die Führungsfläche kann eine bessere Verteilung des Wassers über die gesamte Fläche des Fassadenelements erzielt werden. Vorzugsweise haftet das Wasser mittels Adhäsion an der Oberfläche der Führungsfläche und wird infolge der Schwerkraft und/oder des Dochteffekts nach unten zu den Grünpflanzen und/oder dem Moos transportiert. Das Moos bzw. die Grünpflanzen können die Führungsfläche von unten nach oben besiedeln.

Um den ästhetischen Eindruck des Fassadenelements zur Begrünung von Fassaden zu verbessern, kann in einer Ausgestaltung vorgesehen sein, dass der Körper an seiner Vorderseite eine Aufnahme zur Halterung einer Sichtblende aufweist, insbesondere einer Sichtblende aus einem Naturstein oder einem Kunststoff oder einem Metall. Über die Sichtblende kann die Optik des Fassadenelements an eine vorhandene Häuserfassade angepasst werden.

Erfindungsgemäß ist eine Vorrichtung zur Begrünung von Fassaden vorgesehen, umfassend mehrere der vorstehend beschriebenen Fassadenelemente, wobei die Fassadenelemente übereinander und/oder nebeneinander gestapelt sind. Wesentlich dabei ist, dass mehrere der Fassadenelemente derart übereinander gestapelt sind, dass der Wasserauslauf des jeweils oberen Fassadenelements den Wassereinlauf des jeweils unteren Fassadenelements speist.

Ein Vorteil dieser Anordnung ist, dass sich die Fassadenelemente selbst mit Wasser versorgen, indem beispielsweise Regenwasser von dem obersten Fassadenelement in Form einer Kaskade nach unten fließt. Ein Nebeneffekt dabei ist, dass das aufgenommene Regenwasser durch die Fassadenelemente gereinigt wird. Die in dem Regenwasser gelösten Stoffe können dabei zur Düngung der Grünpflanzen und/oder des Mooses beitragen.

In einer Ausgestaltung kann vorgesehen sein, dass mehrere der Fassadenelemente oder dass die mehreren Fassadenelemente an einer Fassade befestigt sind, insbesondere mit der Fassade verschraubt sind. Dadurch können die Fassadenelemente mechanisch stabil mit einer Fassade verbunden werden.

In einer vorteilhaften Ausgestaltung kann vorgesehen sein, dass die Fassadenelemente selbsttragend ausgebildet sind, derart, dass die unteren Fassadenelemente das Gewicht der oberen Fassadenelemente tragen, dergestalt, dass die Fassade nicht durch das Gewicht der Fassadenelemente belastet ist, insbesondere dergestalt, dass das Gewicht der Fassadenelemente durch die untersten Fassadenelemente in den Boden abgeleitet wird. Dadurch ist es möglich, auch Fassaden mit den Fassadenelementen zu versehen, die statisch nicht dafür ausgelegt sind, ein zusätzliches Gewicht zu tragen. Indem die Fassadenelemente ihr Eigengewicht selbst tragen, können so selbst Altbauten relativ einfach begrünt werden.

Um den Betrieb der Fassadenelemente und die notwendige Pflege weiter zu verringern kann vorgesehen sein, dass die Vorrichtung zur Fassadenbegrünung ein oberes Wasserreservoir und ein unteres Wasserreservoir zur Versorgung der Fassadenelemente mit Wasser vorsieht, wobei über die Fassadenelemente und eine Pumpe ein umlaufender Wasserkreislauf zwischen dem unteren Wasserreservoir und dem oberen Wasserreservoir gebildet ist. Durch das Wasserreservoir können größere Mengen an Regenwasser aufgefangen werden. Über den Wasserkreislauf können die Fassadenelemente zur Begrünung dazu beitragen, dass das Mikroklima verbessert wird, indem beispielsweise die Temperatur an der Fassade durch die Wasserverdunstung über die Grünpflanzen und/oder das Moos verringert wird. Dadurch kann beispielsweise im Sommer die notwendige Leistung zur Klimatisierung eines mit dem erfindungsgemäßen Fassadenelement versehenen Gebäudes reduziert werden.

Vorteilhaferweise können Solarzellen vorgesehen sein, um die Pumpe mit Strom zu versorgen.

Um den Pflegeaufwand zu verringern, kann vorgesehen sein, dass das obere Wasserreservoir und/oder das untere Wasserreservoir ausschließlich durch Regenwasser gespeist wird.

Weitere Ausgestaltungen der Erfindung sind in den Figuren gezeigt sowie in der nachfolgenden Figurenbeschreibung beschrieben. Dabei zeigen:
- Fig. 1:: eine schematische Darstellung eines erfindungsgemäßen Fassadenelements;
- Fig. 2:: einen Schnitt durch das Fassadenelement der Fig. 1,
- Fig. 3:: eine Vorrichtung zur Begrünung von Fassaden umfassend mehrere der erfindungsgemäßen Fassadenelemente;
- Fig. 4:: Ein weiteres Ausführungsbeispiel des Fassadenelements;
- Fig. 5:: Ein Schnitt entlang der Traufkante in Figur 4.
Die in den Figuren gezeigten Ausführungsbeispiele stellen ein mögliches Ausgestaltungsbeispiel dar und sollen nicht einschränkend verstanden werden. Für den Fachmann ist klar, dass er innerhalb des Schutzbereichs der Ansprüche die Ausgestaltung der Fassadenelemente abändern kann, um beispielsweise diese an die örtlichen Gegebenheiten anzupassen, ohne dabei den erfinderischen Gedanken zu verlassen.

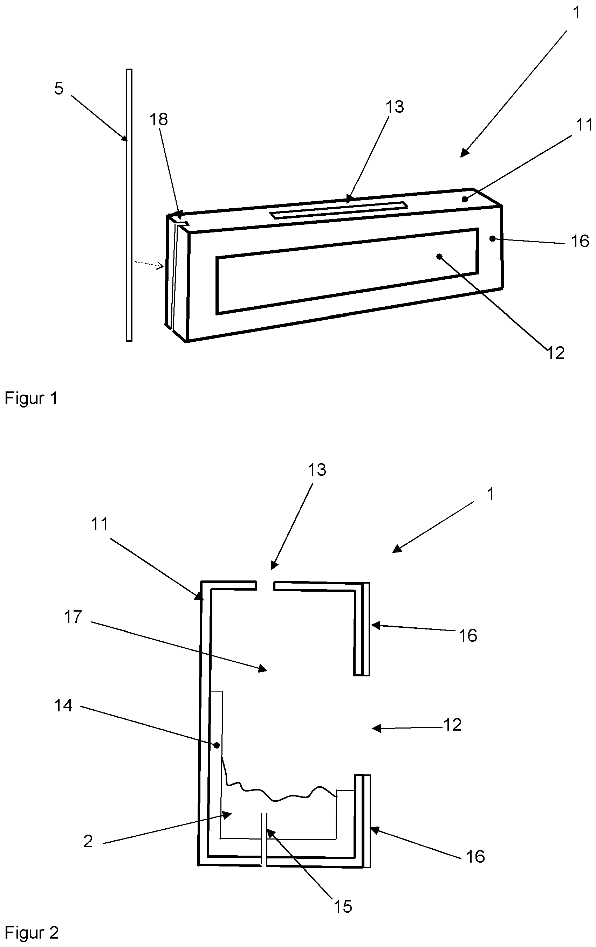

In der Fig. 1 ist ein Fassadenelement 1 schematisch dargestellt. Das Fassadenelement 1 weist einen Körper 11 auf, der beispielsweise aus Beton gegossen ist. Vorteilhafterweise kann dabei Leichtbeton verwendet werden, um das Gewicht des Fassadenelements zu reduzieren. Der Körper 11 weist an seiner Vorderseite eine Öffnung 12 auf, durch die der im Inneren des Körpers 11 angeordnete Hohlraum 17 mit der Umgebung in Verbindung steht. Durch diese Öffnung 12 erhält eine im Hohlraum 17 angeordnete Grünpflanzenkultur und/oder Mooskultur die notwendige Verbindung zur umgebenden Atmosphäre und zum Licht.

An der Oberseite des Körpers 11 ist ein Wassereinlauf 13 angeordnet. Der Wassereinlauf 13 ist als länglicher Schlitz dargestellt. Alternativ kann der Wassereinlauf 13 auch mehrere nebeneinander angeordnete Öffnungen, insbesondere runde Öffnungen und/oder rechteckige Öffnungen umfassen. Durch diesen Wassereinlauf kann beispielsweise Regenwasser in den Hohlraum 17 des Körpers 11 geführt werden.

Wie in der Figur 2 dargestellt, ist im Inneren des Hohlraums 17 ein Wasserspeicher 14 angeordnet. Der Wasserspeicher 14 weist ein poröses Material zum Speichern von Wasser auf, sodass das durch den Wassereinlauf 13 eingeleitete Wasser in dem Wasserspeicher 14 gespeichert wird.

Im unteren Bereich des Hohlraums 17 ist ein Wasserablauf 15 angeordnet, dessen Mündung oberhalb des Bodens des Hohlraums 17 angeordnet ist, derart, dass im Bereich des Bodens des Hohlraums 17 ein gewisser Wasserpegel gehalten wird. Durch diesen Wasserpegel erhält die innerhalb des Hohlraums 17 angeordnete Grünpflanzenkultur 2 bzw. das innerhalb des Hohlraums 17 angeordnete Moos 2 immer ausreichend Wasser. In der Zeichnung nicht dargestellt ist ein optionales Substrat zur Verwurzelung einer Grünpflanzenkultur bzw. des Mooses, welches ebenfalls im Hohlraum 17 angeordnet sein kann. Der Wasserablauf 15 führt das überschüssige Wasser des Fassadenelements nach unten ab, sodass die in dem Hohlraum 17 kultivierte Grünpflanzenkultur oder Moospflanzen keinesfalls zu viel Wasser erhalten.

Seitlich weist der Körper 11 eine Ausnehmung 18 auf, welche dazu dient, ein Verbindungselement 5 aufzunehmen, mit dem das Fassadenelement 1 an einer Fassade und/oder an weiteren Fassadenelementen befestigt werden kann. Das Verbindungselement 5 kann beispielsweise als ein Winkeleisen und/oder als eine Leiste und/oder als ein T-förmiges Verbindungselement ausgebildet sein.

Wie in der Fig. 2 in der Schnittdarstellung gut zu sehen ist, weist das Fassadenelement 1 bzw. der Körper 11 an seiner Vorderseite eine Sichtblende 16 auf. Die Sichtblende 16 kann beispielsweise aus einem Naturstein oder aus Klinkern bestehen und sorgt dafür, dass das Fassadenelement 1 von seiner Optik her an eine bestehende Häuserfassade angepasst werden kann.

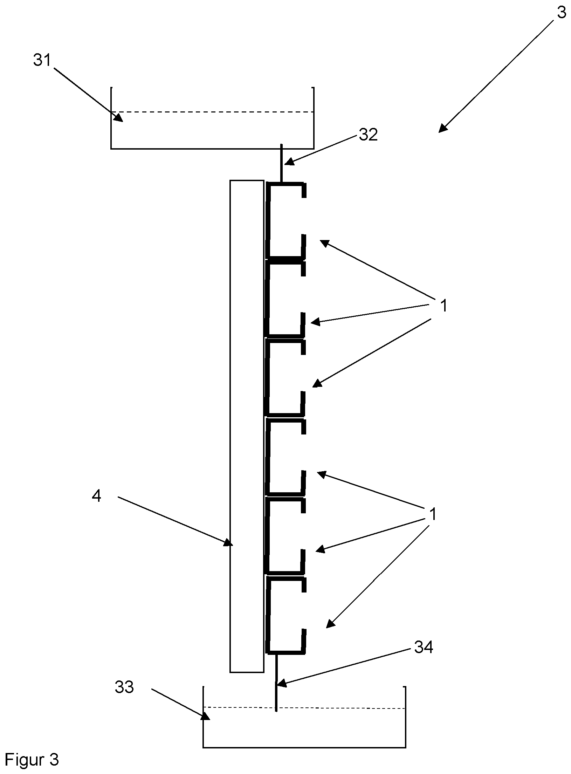

Die Fig. 3 zeigt eine Vorrichtung 3 zur Fassadenbegrünung umfassend mehrere der vorstehend beschriebenen Fassadenelemente 1. An einer Fassade 4 sind eine Mehrzahl von Fassadenelementen 1 übereinandergestapelt. In der Praxis werden die Fassadenelemente 1 nicht nur übereinander, sondern auch nebeneinander, beispielsweise in einer N x M-Anordnung an der Fassade befestigt.

An der Oberseite der Vorrichtung 3 zur Begrünung von Fassaden 3 ist ein oberes Wasserreservoir 31 angeordnet. Dieses Wasserreservoir 31 ist als Auffangbehälter für Regen ausgebildet und weist einen gewissen Wasserstand, in Figur 3 durch die strichlinierte Linie dargestellt, auf. Über einen Wasserzulauf 32 wird das Wasser des oberen Wasserreservoirs 31 zu den Fassadenelementen 1 geführt. In den Fassadenelementen 1 fließt das Wasser kaskadenförmig nach unten, bis es von dem untersten Fassadenelement 1 mittels eines Wasserablaufs 34 in das untere Wasserreservoir 33 geleitet wird.

Auch in dem unteren Wasserreservoir 33 bildet sich ein entsprechender Wasserstand aus, in Figur 3 durch die strichlinierte Linie dargestellt.

Mittels einer nicht dargestellten solarversorgten Pumpe wird ein Wasserkreislauf geschaffen, dergestalt, dass die Pumpe Wasser von dem unteren Wasserreservoir 33 zu dem oberen Wasserreservoir 31 pumpt. Dadurch wird ein Wasserkreislauf geschaffen, der von Regenwasser gespeist ist und zur Versorgung der Kulturen in den Fassadenelementen 1 beiträgt. Dadurch ist es möglich, dass sich die Fassadenelemente 1 selbst versorgen und eine entsprechende Pflege der Fassadenelemente, wie beispielsweise durch regelmäßiges Gießen oder Düngen, nicht notwendig ist.

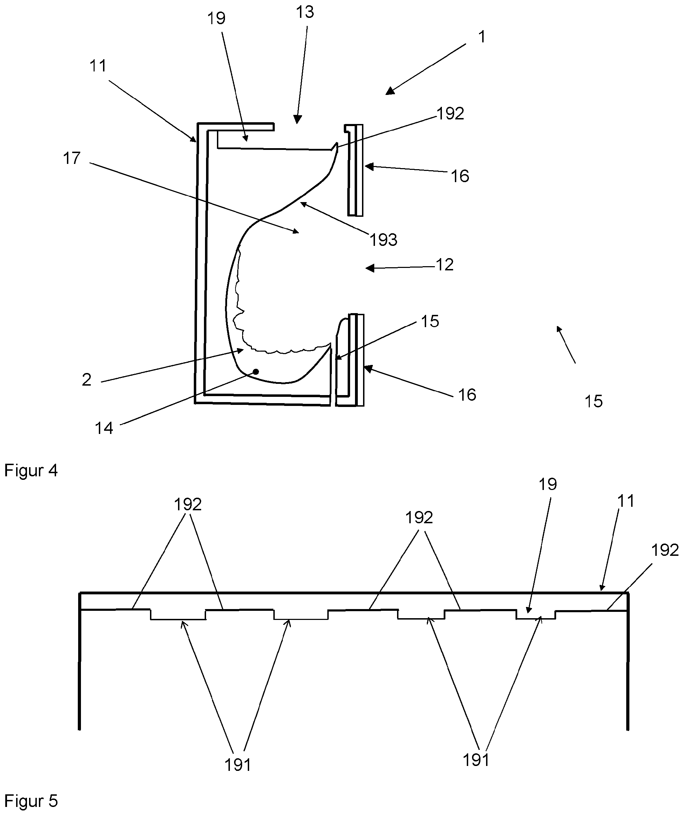

In Figur 4 ist eine Variante des Fassadenelements 1 dargestellt. In Abwandlung des in Figur 2 dargestellten Fassadenelements weist das Innenleben eine unterhalb des Wassereinlaufs angeordnete Auffangrinne 19 auf und die Breite des Wassereinlaufs 13 wurde vergrößert. Durch den Wassereinlauf 13 eintretendes Wasser wird zunächst in der Auffangrinne 19 gesammelt. Die Auffangrinne 19 dient als Pufferspeicher für das Wasser. An ihrer freien Kante weist die Auffangrinne 19 eine erhöhte Traufkante 192 auf, die von mehreren Überläufen 191 unterbrochen ist, wie in Figur 5 schematisch dargestellt. Über die Überläufe kann das gesammelte Wasser von der Auffangrinne 19 in den Innenraum des Fassadenelements 1 gelangen. Im unteren Bereich ist im Bereich des Hohlraums 17 ein Wasserablauf 15 angeordnet. Über diesen Wasserablauf 15 fließt das im Bereich der Grünpflanzenkultur 2 gesammelte Wasser nach unten, bzw. zum nächst tieferen Fassadenelement ab. Über die Höhe des Wasserablaufs 15 kann der Wasserstand der Grünpflanzenkultur 2 reguliert werden.

Die Überläufe 191 sind entlang der vorderen Kante bzw. freien Kante der Auffangrinne 19 verteilt angeordnet. Die Überläufe verteilen das aus der Auffangrinne 19 austretende Wasser auf die Breite des Fassadenelements 1 und vergleichmäßigen so den Wassereintrag. Je nach Dimensionierung der Überläufe 191 kann die Menge des in der Auffangrinne 19 gesammelten Wassers variiert werden.

Unterhalb der Überläufe 191 ist eine konkav gekrümmte Führungsfläche 193 angeordnet. Das Wasser wird entlang dieser Führungsfläche 193 nach unten, also zu dem unten angeordneten Wasserreservoir bzw. zu den Grünpflanzen oder dem Moos 2 geführt.

Die Grünpflanzen bzw. das Moos 2 können die Führungsfläche 193 auf der gesamten Breite von unten nach oben bewachsen. Die Führungsfläche 193 dient als Substrat für den Bewuchs, d. h. dieser findet an der Führungsfläche 193 ideale Wachstumsbedingungen vor. Durch den mittels der Auffangrinne 19 bzw. über die Führungsfläche vergleichmäßigten Wassereintritt wird die Bewässerung der Grünpflanzen oder des Moos 2 deutlich verbessert.
- 1: Fassadenelement
- 11: Körper
- 12: Öffnung
- 13: Wassereinlauf
- 14: Wasserspeicher
- 15: Wasserablauf
- 16: Sichtblende
- 17: Hohlraum
- 18: Ausnehmung
- 19: Auffangreservoir
- 191: Überlauf
- 192: Traufkante
- 193: Führungsfläche

- 2: Moos

- 3: Vorrichtung zur Fassadenbegrünung
- 31: oberes Wasserreservoir
- 32: Wasserzulauf
- 33: unteres Wasserreservoir
- 34: Wasserablauf

- 4: Fassade

- 5: Verbindungselement

## Patentansprüche

1. Fassadenelement zur Begrünung von Fassaden, umfassend einen Körper (11) mit einem Hohlraum (17) zur Ansiedlung von Grünpflanzen und/oder Moos (2) und einer vorderseitigen Öffnung (12), wobei der Körper (11) an seiner Oberseite einen Wassereinlauf (13) und an seiner Unterseite einen Wasserauslauf (15) aufweist,
**dadurch gekennzeichnet,**
**dass** im Bereich des Hohlraums (17) ein Wasserspeicher (14) angeordnet ist und der Wasserauslauf (15) in einer derartigen Höhe angeordnet ist, dass im unteren Bereich des Hohlraums (17) sich ein Wasserstand entsprechender Höhe ausbildet, um die Grünpflanzen und/oder das Moos (2) zu versorgen.

2. Fassadenelement nach Anspruch 1,
**dadurch gekennzeichnet,**
**dass** der Wasserauslauf (15) ein in dem Hohlraum (17) angeordnetes Natursteinelement aufweist, welches einen vertikalen Spalt zum Abführen von Wasser umfasst.

3. Fassadenelement nach Anspruch 1 oder 2,
**dadurch gekennzeichnet,**
**dass** der Körper (11) aus einem Beton gegossen, oder aus einzelnen Platten, insbesondere aus Betonplatten, zusammengesetzt ist.

4. Fassadenelement nach einem der Ansprüche 1 bis 3,
**dadurch gekennzeichnet,**
**dass** der Körper (11) eine seitlich angeordnete Ausnehmung (18) zur Aufnahme eines Halteelements (5) und/oder eines Verbindungselements aufweist.

5. Fassadenelement nach einem der vorhergehenden Ansprüche,
**dadurch gekennzeichnet,**
**dass** im Bereich des Hohlraums (17) ein Substrat zur Ansiedlung von Grünpflanzen und/oder Moos (2) angeordnet ist.

6. Fassadenelement nach einem der vorhergehenden Ansprüche,
**dadurch gekennzeichnet,**
**dass** im Bereich des Hohlraums (17) und unterhalb des Wassereinlaufs (13) eine Auffangrinne (19) zum Auffangen von Wasser angeordnet ist.

7. Fassadenelement nach Anspruch 6,
**dadurch gekennzeichnet,**
**dass** die Auffangrinne (19) an ihrer Vorderseite eine Traufkante (192) aufweist, die von einer Überlauföffnung (191) oder mehreren Überlauföffnungen (191) unterbrochen ist.

8. Fassadenelement nach einem der Ansprüche 6 oder 7,
**dadurch gekennzeichnet,**
**dass** die Überlauföffnung (191) oder die Überlauföffnungen (191) zum Abführen von Wasser ausgebildet sind und an Ihrer Unterseite eine Führungsfläche (193) zum Leiten von Wasser nach unten angeordnet ist, wobei die Führungsfläche (193) als eine konkav gekrümmte Führungsfläche (193) ausgebildet ist.

9. Fassadenelement nach einem der vorhergehenden Ansprüche,
**dadurch gekennzeichnet,**
**dass** der Körper (11) an seiner Vorderseite eine Aufnahme zur Halterung einer Sichtblende (16) aufweist, insbesondere einer Sichtblende (16) aus einem Naturstein oder einem Kunststoff oder einem Metall.

10. Vorrichtung zur Begrünung von Fassaden, umfassend mehrere der Fassadenelemente (1) gemäß einem der vorhergehenden Ansprüche, wobei mehrere der Fassadenelemente (1) übereinander und/oder nebeneinander gestapelt sind,
**dadurch gekennzeichnet,**
**dass** mehrere der Fassadenelemente (1) derart übereinander gestapelt sind, dass der Wasserauslauf (15) des jeweils oberen Fassadenelements (1) den Wassereinlauf (13) des jeweils unteren Fassadenelements (1) speist.

11. Vorrichtung zur Begrünung von Fassaden nach Anspruch 10,
**dadurch gekennzeichnet,**
**dass** mehrere der Fassadenelemente (1) oder dass alle Fassadenelemente (1) an einer Fassade (4) befestigt sind, insbesondere mit der Fassade (4) verschraubt sind.

12. Vorrichtung zur Begrünung von Fassaden nach Anspruch 10 oder 11, **dadurch gekennzeichnet,**
**dass** die Fassadenelemente (1) selbsttragend ausgebildet sind, derart, dass die unteren Fassadenelemente (1) das Gewicht der oberen Fassadenelemente (1) tragen, dergestalt, dass die Fassade (4) nicht durch das Gewicht der Fassadenelemente (1) belastet ist, insbesondere dergestalt, dass das Gewicht der Fassadenelemente (1) durch die untersten Fassadenelemente (1) in den Boden abgeleitet wird.

13. Vorrichtung zur Begrünung von Fassaden nach einem der Ansprüche 10 bis 12,
**dadurch gekennzeichnet,**
**dass** ein oberes Wasserreservoir (31) und ein unteres Wasserreservoir (33) zur Versorgung der Fassadenelemente (1) mit Wasser vorgesehen ist, wobei über die Fassadenelemente (1) und eine Pumpe ein umlaufender Wasserkreislauf zwischen dem unteren Wasserreservoir (33) und dem oberen Wasserreservoir (31) gebildet ist.

14. Vorrichtung zur Begrünung von Fassaden nach Anspruch 13,
**dadurch gekennzeichnet,**
**dass** Solarzellen vorgesehen sind, um die Pumpe mit Strom zu versorgen.

15. Vorrichtung zur Begrünung von Fassaden nach Anspruch 13 oder 14,
**dadurch gekennzeichnet,**
**dass** das obere Wasserreservoir (31) und/oder das untere Wasserreservoir (33) ausschließlich durch Regenwasser gespeist wird.
